Europäisches Patentamt

European Patent Office

Office européen des brevets

(19)

(11) Veröffentlichungsnummer: **0 045 839**
**A1**

(12)

# EUROPÄISCHE PATENTANMELDUNG

(21) Anmeldenummer: 81104270.4

(22) Anmeldetag: 03.06.81

(51) Int. Cl.³: **B 65 B 37/20**
**G 01 F 11/24**

(30) Priorität: **10.06.80 US 158321**

(43) Veröffentlichungstag der Anmeldung:
**17.02.82 Patentblatt 82/7**

(84) Benannte Vertragsstaaten:
**AT BE CH DE FR GB IT LI LU NL SE**

(71) Anmelder: **Firma Otto Hämmerle**
**Kaiser-Franz-Josef-Strasse 8**
**A-6890 Lustenau(AT)**

(72) Erfinder: **Hamilton, Joel A.**
**101 Hardenburgh Avenue**
**Demarest, NJ 07627(US)**

(74) Vertreter: **Hefel, Herbert, Dipl.-Ing.**
**Egelseestrasse 65a**
**Postfach 61 A-6800 Feldkirch(AT)**

(54) **Einrichtung zum Dosieren von staub-, pulverförmigem oder rieselfähigem Füllgut.**

(57) Die Dosiereinrichtung für staub-, pulverförmiges oder rieselfähiges Füllmaterial besitzt taschenartige Mulden (12) mit einem elastisch verformbaren Boden (26). Diese Mulden sind in einem sich drehenden Rohrstück (10) angeordnet, das sich am unteren Ende eines Zuführschachtes (30) befindet und das dessen Auslaßöffnung (32) verschließt. Im Inneren dieses Rohrstückes (10) ist koaxial ein Stellglied (22) gelagert. Zwischen dem Rohrstück mit den taschenartigen Mulden (12) und dem erwähnten Stellglied (22) sind radial gerichtete Bolzen (18) angeordnet, mit ihrem einen Ende am Boden (26) der taschenartigen Mulden anliegend und die mit ihrem inneren Ende mit dem Stellglied (22) in Wirkverbindung stehen. In dem Bereich, in dem die Bolzen (18) am Stellglied (22) anliegen, besitzt dieser einen Konus (24). Durch die axiale Verschiebung des Stellgliedes (22) mittels einer Gewindespindel (52) werden die radial angeordneten Bolzen (18) axial verschoben und drücken von der Rückseite her gegen den Boden (26) der Mulden (12), wodurch sich das Volumen verringert. Der Boden (26) ist so in das Rohrstück (10) eingesetzt, daß er eine geringe Vorspannung aufweist, die den Bolzen gegen das Stellglied zu drücken versucht.

Fig.1

Die Erfindung bezieht sich auf eine Einrichtung zum Dosieren von staub-, pulverförmigen oder rieselfähigem Füllgut mit einem im wesentlichen vertikalen Zuführschacht und einem sich drehenden, walzenförmigem Rohrstück, das die Auslaßöffnung des Zuführschachtes verschließt und das vorzugsweise mehrere taschenartige Mulden gleicher Größe und gleichen Abstandes voneinander zur Aufnahme des Füllgutes aufweist, wobei das Aufnahmevolumen dieser Mulden durch Heben oder Senken des Bodens der Mulde veränderbar ist.

Einrichtungen dieser Art sind bekannt. Durch die sich drehende Walze wird das von den taschenartigen Mulden oder Vertiefungen aufgenommene Füllgut nach unten gebracht, wo die Mulde infolge des Eigengewichtes des nun frei gegebenen Füllgutes entleert wird. Das Füllgut fällt dann auf eine unterhalb der Walze vorbeigeführte Folie oder Bahn, die für Verpackungszwecke verwendet wird. Um die Aufnahmevolumen der Mulden zu verändern und sie dem jeweiligen Füllgut anpassen zu können, wurden schon verschiedene Maßnahmen vorgeschlagen. Bei einer von keilförmig schrägstehenden Wänden begrenzten Aufnahmemulde (DE-PS 233.231) ist der Boden dreiteilig ausgebildet. Diese Bodenteile sind mittels einer Gewindespindel und daran angeordneten Lenkern heb- und senkbar und darüberhinaus noch in ihrer Ebene gegeneinander verschiebbar. Diese Konstruktion ist sehr aufwendig und beispielsweise für puderförmiges oder staubförmiges Füllgut überhaupt nicht geeignet, da so viele gegeneinander verstellbare Teile nur sehr schwer so gegeneinander abgedichtet werden können, daß dieses puder- oder staubförmige Füllgut nicht allmählich diese Verstellmechanik belegt.

Bei einer anderen Einrichtung dieser Art, es handelt sich hier um eine Sähmaschine (DE-PS 81.360), sind die Böden der einzelnen Aufnahmemulden oder Aufnahmezellen über Hebel verschiebbar gelagert. Pro Boden sind Hebel paarweise vorgesehen. Ein Hebel eines Hebelpaares eines jeden Bodens ist darüberhinaus an einem gemeinsamen zentral angeordneten Stellrad verankert. Durch das Drehen des Stellrades werden die Böden angehoben bzw. abgesenkt und damit das Aufnahmevolumen der Aufnahmezellen reguliert. Auch hier liegt eine mechanisch aufwendige und damit teure Konstruktion vor.

Bei einer weiteren bekannten Einrichtung dieser Art (US-PS 4.162.751) ist die sich drehende Walze mittig durchbrochen und hier ist ein Bodenteil eingesetzt, der über ein Zahnradgetriebe heb- und senkbar ist. Diese aufwendige Verstellmechanik benötigt erheblichen Platz, so daß in der Walze nur eine einzige Aufnahmemulde vorgesehen werden kann.

Schlußendlich sind noch solche Beschickungseinrichtungen bekannt (US-PS 709.793), bei welchen die Aufnahmemulden zylindrisch ausgebildet sind mit einem kolbenartig verschiebbaren Boden. Der Boden wird dabei während der Umdrehung der Walze über eine Kurvenführung in der Weise gesteuert, daß beim Anfahren einer Mulde in die Auslaßöffnung des Fülltrichters der Boden ganz angehoben ist, daß beim Weiterfahren der Boden allmählich nach unten wandert, wobei er nach Art einer Kolbenpumpe das Füllmaterial ansaugt, um dann an der Entladestelle schlagartig gegen die Wirkung einer vorgespannten Feder freigegeben zu werden. Auch diese Einrichtung ist zum Dosieren von staub- und/oder pulverförmigen Materialien nicht geeignet, abgesehen davon ist sie mechanisch außerordentlich aufwendig.

Aufgabe und Ziel der Erfindung ist es, eine Dosiereinrichtung zu schaffen, die einen einfachen mechanischen Aufbau besitzt und mit welcher die Aufnahmevolumen der taschenartigen Mulden für das Füllgut einfach, rasch und vor allem sehr genau verändert werden können. Erfindungsgemäß wird dies dadurch erreicht, daß der Boden der Mulde elastisch verformbar ist und bei größtem Aufnahmevolumen der Mulde vorgespannt ist und an der Rückseite des Bodens ein in einer radialen Querbohrung verschiebbar geführter Bolzen anliegt, der mittels eines koaxial mit dem Rohrstück liegenden Stellgliedes axial gegen den Boden verschiebbar ist.

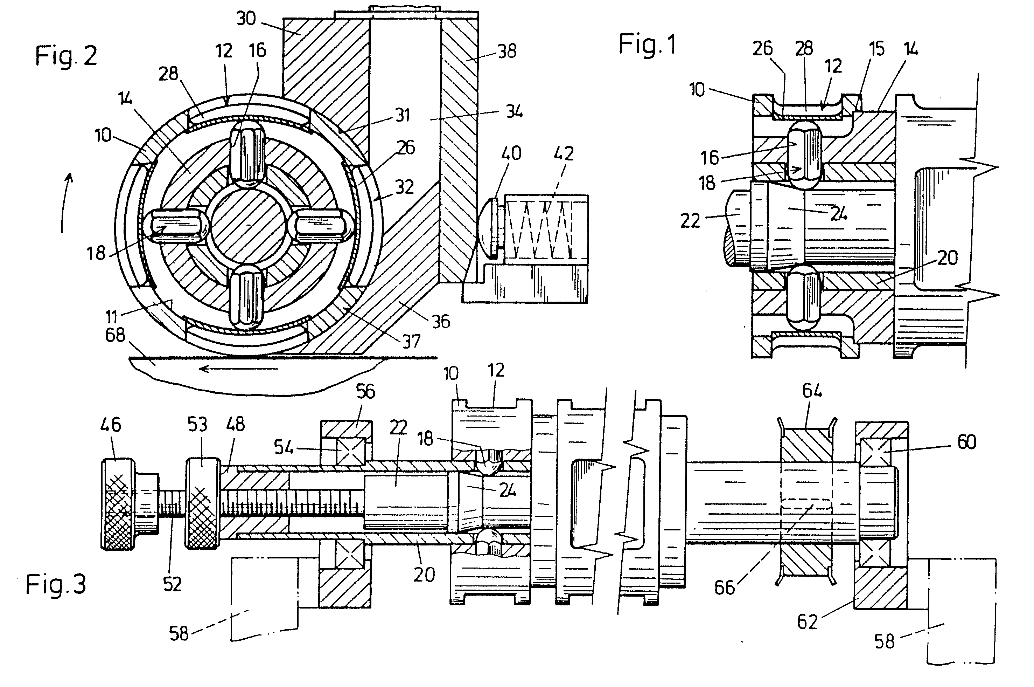

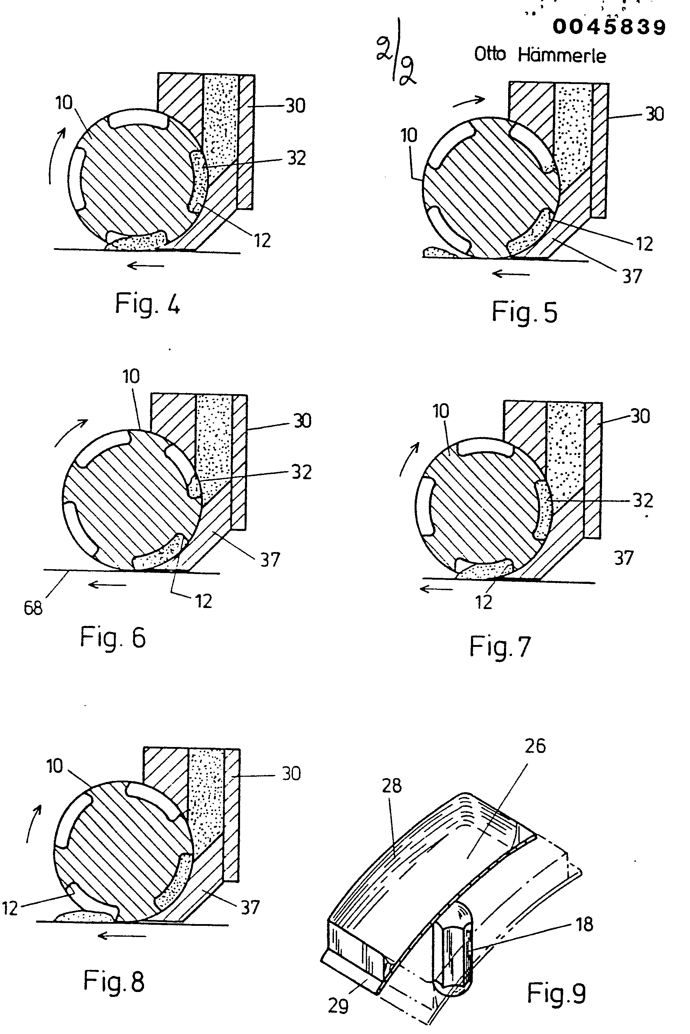

Um die Erfindung zu veranschaulichen, wird sie anhand eines Ausführungsbeispieles näher beschrieben. Es zeigen: Fig. 1 eine Ansicht, zum Teil aufgeschnitten, durch das sich drehende Rohrstück; Fig. 2 einen Querschnitt durch das Rohrstück und den Zuführschacht; Fig. 3 eine Ansicht in einem gegenüber den Fig. 1 und 2 verkleinertem Maßstab, zum Teil geschnitten; die Fig. 4 bis 8 schematische Schnittdarstellungen mit der fortschreitenden Beschickung, Füllung und Verteilung des Füllgutes auf eine vorbeiziehende Bahn oder Folie; Fig. 9 veranschaulicht in Schrägsicht und gegenüber den anderen Figuren mit vergrößertem Maßstab und im Schnitt eine vorzugsweise Ausbildung des Bodens und des Seitenbordes der taschenartigen Mulde.

Eine schematische und zum Teil im Schnitt gezeigte Darstellung einer bevorzugten Ausführungsform ist in den Fig. 1 bis 3 gezeigt. Ein sich drehendes, äußeres, kurzes Rohrstück 10 ist mit einer Vielzahl gleich großer und voneinander in gleichen Abständen angeordneter taschenartiger Mulden ausgestattet. Vier solcher taschenartiger Mulden 12 sind hier gezeigt, es können aber auch mehr oder weniger solcher taschenartiger Mulden 12 vorgesehen werden, sofern der Abstand der aufeinander folgenden Mulden 12 hinreichend groß ist, so daß eine verläßliche Durchflußsperre gewährleistet wird. Das Rohrstück 10 ist seinerseits getragen durch und auf einem Rohrstückträger 14. Dieser Rohrstückträger 14 weist einen schulterförmigen Absatz 15 auf, derso bemessen und gestaltet ist, daß er das Rohrstück 10 trägt und positioniert.

Dieser innere Rohrstückträger 14 weist radiale Querbohrungen 16 auf. Für jede taschenartige Mulde 12 ist eine solche Querbohrung 16 vorgesehen und gemäß der gezeigten Ausführungsform sind vier radiale Querbohrungen 16 pro Rohrstück 10 vorgesehen. Bolzen 18 sind in diesen radialen Querbohrungen 16 verschiebbar und gleitend gelagert. Der innere Rohrstückträger 14 istaufgeschoben auf ein Tragrohr 20 und innerhalb dieses Tragrohres 20 ist ein inneres schaftartiges Stellglied 22 gelagert. Dieses Stellglied 22 ist im Tragrohr 20 axial verschiebbar und korrespondierend zu jedem der drehbar gelagerten Rohrstücke 10 ist hier ein Konus 24 an diesem Stellglied 22 angeformt oder angeordnet. Diese Konen stehen in Wirkverbindung mit den pro Rohrstück 10 vorgesehenen Bolzen 18 und verschieben diese.

Jede taschenartige Mulde 12 ist durch einen Boden 26 abgeschlossen, welcher vorzugsweise aus einem dünnen, federartig elastischem Metall besteht, an welchem fest ein seitlicher Bord 28 angeordnet ist, welcher aus einem gummielastisch verformbaren Material besteht, beispielsweise aus Gummi od. dgl. Wie insbesondere aus Fig. 2 zu ersehen ist, liegt jedes drehbar gelagerte Rohrstück 10 mit seinertaschenartigen Mulden im Bereich eines Zuführschachtes 30, der in seinem unteren Ende einen genau passenden, korrespondierenden Ausschnitt 31 aufweist zur Aufnahme des rohrartigen Drehstückes, und auch eine Auslaßöffnung 32. Das Rohrstück 10 wird in diesem Ausschnitt 31 des gefüllten Zuführschachtes 30 gedreht. Jeder Zuführschacht 30 beinhaltet einen Vorratsraum 34 und einen geneigten Bodenansatz 36, der dazu dient, den Inhalt des Zuführschachtes nach unten und zur Auslaßöffnung 32 zu leiten. Der genau passende und korrespondierende Ausschnitt 31 des Zuführschachtes 30 für die Aufnahme des Rohrstückes 10 besitzt auch einen Verschlußabschnitt 37, an dem entlang sich das Rohrstück 10 bewegt und der dazu dient, das überschüssige Füllgut von der taschenartigen Mulde 12 abzustreifen und der ferner die Aufgabe hat, das Füllgut innerhalb dieser taschenartigen Mulde zurückzubehalten bis zur vorgesehenen Entleerung. Der Zuführschacht 30 hat eine Seitenwand 38. Diese Wand 38 ist abnehmbar und durch einen Puffer 40 gehalten, der duch eine Feder 42 in seiner Haltestellung fixiert ist.

Fig. 3 zeigt eine Seitensicht der Dosiereinrichtung in einem etwas verkleinertem Maßstab. Wie daraus ersichtlich, ist das innere schaftartige Stellglied 22 nach rechts oder nach links innerhalb des Trägerrohres 20 verschiebbar, und zwar mittels eines gerändelten Drehknopfes 46, mit welchem eine Gewindespindel 52 in einer Mutter 48 gedreht werden kann. Diese Mutter 48 ist am Trägerrohr 20 endseitig befestigt und die Gewindespindel 52 ist Teil des Stellgliedes 22. Die Kontermutter 53 gewährleistet die von einem Bedienungsmann eingestellte Lage des Stellgliedes. Durch die Drehung des Knopfes 46 verschiebt sich das Stellglied 22 und mit diesem der Konus 24, um die äußere Stellung des Bolzens 18 zu verringern oder zu ver-

BAD ORIGINAL

größern, da diese die Position des Bodens 26 der taschenartigen Vertiefung 12 verändert.

Das Trägerrohr 20 ist an seinem linken Ende (Fig. 3) bezüglich seines Durchmessers verringert und von einem Lager 54 getragen, das seinerseits an einem Lagerbock 56 befestigt ist. Dieser Lagerbock 56 wiederum ist an einem Maschinengestell 58 angeordnet. Das andere Ende des Trägerrohres 20 ist ebenfalls mit einem reduzierten Durchmesser gezeigt und auch dieses Ende ist in einem Lager 60 geführt, das von einem Lagerbock 62 gehalten ist, der ebenfalls am Maschinengestell 58 angeordnet ist. Die Anzahl der Seite an Seite angeordneten Rohrstücke 10 einer Dosiereinrichtung ist ausschließlich eine Frage der Wahl. Jedes Rohrstück und jeder Förderschacht (Fig. 2) ist für das abzufüllende Produkt ausgewählt und es können beliebig viele Einheiten der geschilderten Art nebeneinander auf einem gemeinsamen Tragrohr 20 angeordnet sein. Das von den Lagern 54 und 60 getragene Tragrohr 20 wird über eine Riemenscheibe oder ein Zahnrad 64 in Umdrehung versetzt. Diese Riemenscheibe 64 oder dieses Zahnrad ist auf dem Tragrohr 20 mit einem Keil 66 befestigt. Die Drehgeschwindigkeit des Tragrohres ist abgestimmt auf die Bewegungsgeschwindigkeit der Bahn oder Folie 68. Die Umfangsgeschwindigkeit des Rohrstückes 10 und die Fortbewegungsgeschwindigkeit der Folie 68 sind gleich groß.

Wie in Fig. 3 gezeigt, verschiebt die Drehung des gerändelten Drehknopfes 46 das Stellglied 22 und damit den Konus 24 nach rechts oder nach links, um so auf die Zapfen 18 verschiebend einzuwirken, so daß der federartig nachgebende Boden 26 der taschenarigen Mulde 12 sich nach außen oder nach innen bewegt, um so das Aufnahmevolumen der taschenartigen Mulde 12 zu vergrößern oder zu verkleinern. Die Bewegung des Stellgliedes 22 und des Konus 24 bringen die gleichzeitige, gewünschte Verstellung für jeden der taschenartigen Vertiefungen 12. Es kann erwogen werden, so viel wie möglich Rohrstücke 10 auf einem gemeinsamen Tragrohr 20 anzuordnen und diese Rohrstücke gleichzeitig zu drehen, umgleiche Mengen von Füllgut auf eine sich bewegende Bahn oder auf eine sich bewegende Folie 68 zu bringen. Es können dabei mehr oder weniger solcher Dosiereinrichtungen vorgesehen sein, und obgleich jede Dosiereinrichtung mit vier taschenartigen Mulden 12 gezeigt und beschrieben worden ist, können in jedem Rohrstück 10 beliebige Mengen solcher Mulden vorgesehen werden, so lange der Verschlußabschnitt 37 zwischen den taschenartigen Mulden 12 geeignet ist, die sich drehenden Mulden gegeneinander abzudichten.

Eine mehr oder weniger schematische Darstellung ist in den Fig. 4 bis 8 für die fortlaufende, schrittweise Füllung und Entleerung der taschenförmigen Mulden in Verbindung mit dem Zuführschacht gezeigt. Das Füllgut ist im Zuführschacht 30 bevorratet und wird zu einer taschenartigen Mulde 12 im Rohrstück 10 gebracht und dort eingefüllt, und zwar aufgrund der Schwerkraftwirkung. Jede taschenartige Mulde wird gefüllt, sobald das Rohrstück in den Bereich der Auslaßöffnung 32 des Zuführschachtes gebracht ist.

In Fig. 4 ist das sich drehende Rohrstück mit der taschenartigen Mulde 12 im Bereich der Auslaßöffnung des Zuführschachtes 30 gezeigt. Diese taschenartige Mulde wird hier gefüllt während der Drehbewegung des Rohrstückes. Ebenso gezeigt ist hier eine weitere gefüllte taschenartige Mulde mit dem Füllgut in der zutiefst liegenden Lage, wobei das Füllgut auf die sich fortbewegende Bahn oder Folie entleert wird.

In Fig. 5 ist das Rohrstück gezeigt, wie es sich dreht, so daß die taschenartige Mulde, welche über den Zuführschacht gefüllt worden war, nun in den Bereich des Verschlußabschnittes 37 gebracht wird. Dieser Verschlußabschnitt stellt sicher, daß das Füllgut in der Mulde zurückbehalten wird ohne Verlust und ohne, daß es ausrinnen kann, bis die taschenartige Mulde auf die vorbeiziehende Bahn oder Folie 68 entladen wird.

In .Fig. 6 hat sich das Rohrstück noch nicht so weit gedreht, daß es in seine tiefstmögliche Lage gekommen wäre. Die im Gegenuhrzeigersinn nächstfolgende taschenartige Mulde gelangt hier in den Bereich der Auslaßöffnung 32 des Zuführschachtes.

In Fig. 7 hat sich das Rohrstück ein wenig weitergedreht und die am tiefsten liegende taschenartige Mulde entleert nun das Füllgut auf die vorbeiziehende Folie. Die im Gegenuhrzeigersinn nächstfolgende taschenartige Mulde ist über den Zuführschacht 30 bereits wieder gefüllt und diese gefüllte taschenartige Mulde auch bereits in den Bereich des Verschlußabschnittes 37 gelangt.

In Fig. 8 hat sich nun das Rohrstück soweit gedreht, daß das zu verteilende Füllgut aufgrund der einwirkenden Schwerkraft aus der taschenartigen Mulde auf die vorbeiziehende Bahn fällt. Zur gleichen Zeit ist die taschenartige Mulde, die im Gegenuhrzeigersinn unverzüglich folgt, vollständig gefüllt und der Verschlußabschnitt 37 unmittelbar unter dem Ladebereich hält das Füllgut in dieser Mulde zurück, um die Vollständigkeit der Menge des aufgenommenen Füllgutes sicherzustellen. Die Drehbewegung des Rohrstückes 10 setzt sich weiter fort, und zwar so lange, als Füllgut zu dosieren und zu verteilen ist.

In der Fig. 9 ist eine schematische Schrägsichtdarstellung des Bodens 26 wiedergegeben, der in jeder taschenartigen Mulde 12 vorgesehen ist. Dieser Boden 26 ist federnd ausgebildet und besteht aus einem dünnen Federstahlstreifen, vorzugsweise aus rostfreiem Material. Dieser Streifen ist länger und breiter, als die Öffnung für die Aufnahme der Mulde 12 im Rohrstück 10. Dieser federnde Streifen, wie aus den Fig. 1 und 2 ersichtlich, ist bei seinem funktionsgerechten Einbau mit dem Stift 18 in Wirkverbindung, der seinerseits durch den Konus 24 des Stellgliedes 22 axial verschiebbar ist. Dieser Stift wird vorgeschoben oder zurückgedrückt, so daß bei ordnungsgemäßer Montage alle Mulden ein gleiches Aufnahmevolumen besitzen. Jeder Bodenteil 26 trägt an seinem äußeren Bereich einen Bord 28. Dieser Bord 28 ist aus gummielastischem Material und sichert so einen festen und dichten Sitz der Mulde 12 in der Aussparung des Rohrstückes 10. In einer praktischen Ausführung ist die so geformte Mulde geeicht, so daß ihr Aufnahmevolumen genau ist. Jede Mulde besitzt gleiches Aufnahmevolumen, so daß beim Gebrauch die durch den Drehknopf 46 bewirkbare Verstellung für alle Mulden gleichzeitig und im gleichen Ausmaß wirksam wird. Eine solche Verstellung und Abänderung des Aufnahmevolumens in jeder Mulde ist erwünscht, da das Füllgut das spezifische Gewicht wechseln kann in Abhängigkeit von den Arbeitsbedingungen oder in Abhängigkeit zum Beispiel der Luftfeuchtigkeit.

Im gezeigten Ausführungsbeispiel wird die Volumsänderung der Mulde 12 durch die axiale Verschiebung des Bolzens 18 erreicht, der in einem Konus 24 des Stellgliedes 22 aufläuft. Das Stellglied wird in diesem Falle axial verschoben. Um die Bolzen 18 heben und senken zu können, wäre es auch möglich, im Stellglied in einer im Umfangsrichtung laufenden Nut den Boden dieser Nut keilförmig oder spiralförmig ansteigen zu lassen. In diesem Falle würde das Stellglied zur Veränderung des Volumens der Mulden nicht axial verschoben, sondern nur radial verdreht, so daß durch die radiale Verdrehung des Stellgliedes die mit ihrem inneren Ende auf den Boden dieser Nuten aufliegenden Bolzen angehoben werden können.

Die Wölbung des vorgespannten, federartig wirkenden Bodens 26 der Mulde 12 drängt den Bolzen 18 gegen den Konus 24 auf dem Stellglied 22. Diese Wölbung aufgrund der erwähnten Vorspannung bewirkt, daß der Zapfen 18 in zurückgeschobener Position gehalten wird. Die Drehung des Knopfes 46 und die daraus resultierende Bewegung des Konus 24 verursacht die gewünschte Änderung des Aufnahmevolumens der Vertiefung 12. Das Gewinde und der Konus sind kallibriert, so daß ein ausgewählter Betrag der Verstellung den gewünschten Wechsel im Aufnahmevolumen der Mulde erzeugt.

Der Zuführschacht, das sich drehende Rohrstück und der Support für die sich bewegende Folie oder Bahn sind aus leicht zu reinigendem und erneuerbarem Material gefertigt. Der federartig wirkende Boden 26 der Mulde ist entsprechend behandelt oder so ausgewählt, daß das zu dosierende und abzupackende Füllgut durch dieses Material nicht beeinflußt wird. Ein besonders schwierig zu dosierendes und zu verteilendes Material ist Kaffeepulver. Diese Art von Füllgut und ähnliche staub- oder puderförmige Stoffe müssen sehr genau bemessen und verteilt werden, und darüberhinaus in außerordentlich dichte Verpackungen eingeschlossen werden. Mit der erfindungsgemäßen Einrichtung ist dies möglich.

Es ist noch zu vermerken, daß die taschenartigen Mulden 12 vorzugsweise kleine gewölbte Abrundungen anstelle von scharfen Ecken besitzen. Die gummielastischen, als Rückhalteschultern wirkenden Borde 28 sind so ausgestaltet, daß sie eine eng anliegende Dichtung für die taschenartigen Mulden bilden. Dank dieser Anordnung ist die Mulde 12 dicht gegenüber dem Inneren des Rohrstückes verschlossen, und zwar auch dann, wenn sich der federartig ausgebildete Boden 26 bei Einstellungen bewegt. Dank dieser Konstruktion können alle Mulden um das gleiche Volumen, um den gleichen Volumsanteil und auch gleichzeitig verstellt werden.

1981 -07- 02

PATENTANWALT
Dipl.-Ing. Herbert HEFEL

810525

P a t e n t a n s p r ü c h e :

1. Einrichtung zum Dosieren von staub-, pulverförmigen oder rieselfähigem Füllgut mit einem im wesentlichen vertikalen Zuführschacht und einem sich drehenden, walzenförmigem Rohrstück, das die Auslaßöffnung des Zuführschachtes verschließt und das vorzugsweise mehrere taschenartige Mulden gleicher Größe und gleichen Abstandes voneinander zur Aufnahme des Füllgutes aufweist, wobei das Aufnahmevolumen dieser Mulden durch Heben oder Senken des Bodens der Mulde veränderbar ist, dadurch gekennzeichnet, daß der Boden (26) der Mulde (12) elastisch verformbar ist und bei größtem Aufnahmevolumen der Mulde (12) vorgespannt ist und an der Rückseite des Bodens (26) ein in einer radialen Querbohrung (16) verschiebbar geführten Bolzen (18) anliegt, der mittels eines koaxial mit dem Rohrstück (10) liegenden Stellgliedes (22) axial gegen den Boden (26) verschiebbar ist.

2. Einrichtung nach Anspruch 1, dadurch gekennzeichnet, daß der aus elastisch verformbarem Material gefertigte Boden (26) nahe seines äußeren Randes und mit Abstand von demselben einen aus gummielastischem Material bestehenden Bord (28) aufweist und dieser Boden (26) zur Bildung der Mulde (12) in einer im Rohrstück (10) ausgesparten Ausnehmung eingesetzt ist.

3. Einrichtung nach Anspruch 2, dadurch gekennzeichnet, daß der Boden (26) mit einer durch den von seinem äußeren Rand distanziert angeordneten Bord (28) gebildeten Schulter (29) an der Innenseite (11) des Rohrstückes (10) anliegt (Fig. 1 und 9).

0045839

4. Einrichtung nach Anspruch 1, dadurch gekennzeichnet, daß das äußere Rohrstück (10) von einem auf einem durchlaufenden Tragrohr (20) aufgeschobenen Rohrstückträger (14) gehalten ist.

5. Einrichtung nach Anspruch 4, dadurch gekennzeichnet, daß der Rohrstückträger (14) aus einer in seiner Achsrichtung absatzartig abgestuften Muffe gebildet ist, an deren äußerem abgestuften Rand (15) das Rohrstück (10) randseitig aufliegt.

6. Einrichtung nach einem der Ansprüche 1 bis 5, dadurch gekennzeichnet, daß das Rohrstück (10), der Rohrstückträger (14) und das Tragrohr (20) gegeneinander verdrehgesichert sind.

7. Einrichtung nach Anspruch 1, dadurch gekennzeichnet, daß die Querbohrung (16) für die Aufnahme der axial verschiebbaren Bolzen (18) sowohl den Rohrstückträger (14) wie auch das Tragrohr (20) durchsetzt.

8. Einrichtung nach Anspruch 1, dadurch gekennzeichnet, daß das schaftartige Stellglied (22) axial verschiebbar innerhalb des Tragrohres (20) gelagert ist und das Stellglied (22) konische Ansätze (24) aufweist, an welchem die Bolzen (18) mit ihrem inneren Ende anliegen.

9. Einrichtung nach einem der Ansprüche 1 oder 8, dadurch gekennzeichnet, daß das schaftartige Stellglied (22) an mindestens einem Ende einen Gewindeansatz (52) aufweist, der in einer am Tragrohr (20) endseitig angeordneten Mutter (48) geführt ist und durch diese hindurch nach außen ragt und an ihrem freien Ende einen Betätigungsknopf (46) trägt.

10. Einrichtung nach einem der Ansprüche 1 bis 9, dadurch gekennzeichnet, daß die vom sich drehenden Rohrstück (10) verschlossene Auslaßöffnung (32) des Zuführschachtes (30) seitlich dessen vertikaler Achse angeordnet ist, und die dem Zuführschacht (30) begrenzende, lösbar angeordnete Seitenwand (38) durch einen unter der Wirkung einer Feder (42) stehenden Puffer (40) in ihrer betriebsgemäßen Stellung gehalten ist.

1981 -05- 02

PATENTANWALT
Dipl.-Ing. Herbert HEFEL

Fig. 2

Fig. 1

Fig. 3

Otto Hämmerle

0045839

0045839

Otto Hämmerle

Fig. 4

Fig. 5

Fig. 6

Fig. 7

Fig. 8

Fig. 9

HE 7090

**0045839**

Nummer der Anmeldung

EP 8110427^.4

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | DE - A - 2 262 362 (BERNARDI) -- | |
| A | DE - B - 1 001 944 (TEEPACK-SPEZIALMASCHINEN) + Fig. 5,6 + -- | 1,8,9 |
| A | GB - A - 806 128 (MODERN COFFEES INC.) + Seite 2, Zeile 98 - Seite 3, Zeile 65; Fig. 6,6A + -- | 1,8,9 |
| D | US - A - 2 472 440 (SALFISBERG) -- | |
| A | DD - A - 53 615 (MAHARAJKRISHEN MEHTA) + Anspruch 1; Fig. 1 + -- | 1 |
| A | DE - A - 2 256 929 (SCHWEIZERISCHE INDUSTRIE-G.) + Anspruch 4; Fig. 1 + -- | 1 |
| X | DD - A - 37 352 (WENHOLD) + Fig. 6 + -- | 1-3 |
| D | US - A - 4 162 751 (HETLAND) ---- | |

**KLASSIFIKATION DER ANMELDUNG (Int. Cl.³)**

B 65 B 37/20
G 01 F 11/24

**RECHERCHIERTE SACHGEBIETE (Int Cl )**

B 65 B    1/00
B 65 B    3/00
B 65 B  29/00
B 65 B  37/00
G 01 F  11/00

**KATEGORIE DER GENANNTEN DOKUMENTE**

X: von besonderer Bedeutung
A: technologiscner Hintergrund
O: nichtschriftliche Offenbarung
P: Zwischenliteratur
T. der Erfindung zugrunde liegende Theorien oder Grundsätze
E. kollidierende Anmeldung
D: in der Anmeldung angeführtes Dokument
L: aus andern Gründen angeführtes Dokument
&: Mitglied der gleichen Patentfamilie. übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 25-08-1981 | MELZER |

EPA form 1503.1   06.78